# EUROPÄISCHE PATENTSCHRIFT

(11) **EP 0 981 474 B1**
(45) Veröffentlichungstag und Bekanntmachung des Hinweises auf die Patenterteilung: **04.02.2004**
(21) Anmeldenummer: 98928256.1
(22) Anmeldetag: 13.05.1998
(51) Int. Cl.: B62D 25/14, B60K 37/00

(54) **BAUGRUPPE FÜR EINEN COCKPIT-BEREICH EINES FAHRZEUGES**
SUB-ASSEMBLY FOR A MOTOR VEHICLE DASH BOARD AREA
SOUS-ENSEMBLE POUR ZONE DE TABLEAU DE BORD DE VEHICULE

(30) Priorität: 17.05.1997 DE 19720902
(43) Veröffentlichungstag der Anmeldung: 01.03.2000
(73) Patentinhaber: Siemens Aktiengesellschaft, 80333 München (DE)
(72) Erfinder: WICH, Rolf, D-63512 Hainburg 2 (DE)
(86) Internationale Anmeldenummer: PCT/EP1998/002814
(87) Internationale Veröffentlichungsnummer: WO 1998/052814

(56) Entgegenhaltungen:
- EP-A- 0 546 671
- EP-A- 0 673 829
- DE-A- 4 232 846
- DE-A- 19 524 175
- US-A- 4 671 536
- US-A- 5 593 001

## Beschreibung

Die Erfindung betrifft eine Baugruppe für einen Cockpit-Bereich eines Fahrzeuges, insbesondere eines Kraftfahrzeuges, mit einem sich in etwa über die Breite eines Fahrzeuginnenraumes erstreckenden Querträger, wobei der Querträger an seinen Endbereichen Anschlußstellen zur Verbindung mit einer Fahrzeugzelle und eine zur Fahrzeuglängsachse außermittige Anschlußstelle zur Verbindung mit einer Lenksäule aufweist.

Eine solche Baugruppe ist aus der DE 4 232 846 bekannt. Der Querträger für die Armaturentafel eines Kraftfahrzeuges, der sich über die Breite des Kraftfahrzeuginnenraumes erstreckt und an dessen Unterseite eine Halterung für eine Lenksäule angeschraubt ist, besteht aus mehreren Strangpreßteilen, die durch Schweißen verbunden werden. Zusammen mit der anzuschraubenden Lenksäulenhalterung ist ein solcher Querträger aufwendig in der Herstellung und kann ohne Änderungen nicht für Links- und Rechtslenker-Fahrzeuge eingesetzt werden.

Um hier Abhilfe zu schaffen, ist es Aufgabe der vorliegenden Erfindung, eine Baugruppe der genannten Art für einen Cockpit-Bereich eines Fahrzeuges mit einem Querträger so zu gestalten, daß die Herstellung vereinfacht und die Variantenvielfalt der eingesetzten Bauteile verringert wird.

Gelöst wird die Aufgabe bei einer Baugruppe der genannten Art dadurch, daß der Querträger und die Anschlußstellen eine Baueinheit bilden und daß die äußere Form des Querträgers und die Anschlußstellen zur Verbindung mit der Fahrzeugzelle und zur Verbindung mit der Lenksäule symmetrisch zu der Längsmittelebene des Querträgers sind, wobei die Längsmittelebene des Querträgers die sich vertikal und in Richtung der Fahrzeugquerachse erstreckende Ebene ist, die den auf einer Parallelen zur Fahrzeuglängsachse und senkrecht über dieser liegenden geometrischen Mittelpunkt des Querträgers schneidet. Eine erfindungsgemäße Baugruppe bietet neben einem weitgehend modularen Aufbau durch die Möglichkeit, standardisierte Bauteile zu verwenden, den zusätzlichen Vorteil, daß der Querträger ohne konstruktive Änderungen sowohl für Linkslenker-Fahrzeuge verwendbar ist, als auch für solche, deren Lenkrad sich in der rechten Fahrzeughälfte befindet. Der Querträger wird dazu so in das Fahrzeug eingebaut, daß sein geometrischer Mittelpunkt senkrecht über der Fahrzeuglängsachse liegt. Die Fahrzeuglängsachse ist die in Richtung der Längserstreckung des Fahrzeugs verlaufende Mittelachse des Fahrzeugs. Senkrecht dazu und in einer zu der Ebene durch die Fahrzeugaufstandspunkte parallelen Ebene weist das Fahrzeug eine Querachse auf. Der Schnittpunkt der Fahrzeuglängsachse und der Fahrzeugquerachse legt den Ursprung des Fahrzeugkoordinatensystems fest. Die dritte Achse dieses Raumkoordinatensystems wird als Fahrzeughochachse bezeichnet. Durch die Symmetrie des Querträgers sowie der wichtigsten Anschlußstellen zu der Längsmittelebene des Querträgers, das ist eine zu der Ebene der Fahrzeughoch- und -querachse parallele Ebene, die die in Richtung der Fahrzeugquerachse verlaufende Längsmittelachse des Querträgers beinhaltet, ist der Querträger durch einen um die Hochachse um 180° gedrehten Einbau zur Verwendung sowohl in Links- als auch in Rechtslenker-Fahrzeugen geeignet. Dadurch wird sowohl die Montage vereinfacht als auch die Anzahl der vorzuhaltenden Bauteile vermindert.

Alternativ wird die der Erfindung zugrundeliegende Aufgabe dadurch gelöst, daß der Querträger und die Anschlußstellen eine Baueinheit bilden und daß die äußere Form des Querträgers und die Anschlußstellen zur Verbindung mit der Fahrzeugzelle und zur Verbindung mit der Lenksäule symmetrisch zu dem auf einer Parallelen zur Fahrzeuglängsachse und senkrecht über letzterer liegenden geometrischen Mittelpunkt des Querträgers sind. Je nach vorgesehener Lenkungsanordnung eines in Montage befindlichen Fahrzeugs kann ein solcher punktsymmetrischer Querträger entweder um 180° um seine, den geometrischen Mittelpunkt des Querträgers schneidende Hochachse gedreht oder - was den gleichen Effekt hat - um seine, ebenfalls den geometrischen Mittelpunkt des Querträgers schneidende Längsachse, die parallel zur Fahrzeugquerachse verläuft, um 180° gedreht eingebaut werden. Wie auch bei dem oben beschriebenen erfindungsgemäßen Querträger befinden sich die Anschlußstellen zur Verbindung mit einer Fahrzeugzelle und zur Verbindung mit einer Lenksäule bei jeder Lenkungsvariante an erforderlicher Stelle. Ein solcher Querträger vereinfacht ebenfalls die Lagerhaltung und verringert den Montageaufwand.

Denkbar ist auch, daß durch - vorteilhaft symmetrische - an den Längsenden des Querträgers anbringbare Zwischenstücke der Querträger nicht nur für verschiedene Lenkungsanordnungen eines Fahrzeugs verwendbar ist, sondern ebenso für verschiedene Fahrzeugbreiten.

Vorzugsweise weist der Querträger im Bereich der Anschlußstelle zur Verbindung mit einer Lenksäule eine Auswölbung in Richtung der Fahrzeugoberseite auf, so daß ein Freiraum zur Aufnahme der Lenksäule und zugehöriger Anbauteile erhalten wird. Da die Lenksäule im Interesse einer guten Bedienbarkeit eines Lenkrades sowie einer geringen Verletzungsgefahr im Falle eines Unfalles nicht unter einem beliebigen Winkel in das Fahrzeug eingebaut werden kann, ermöglicht eine vorbeschriebene Auswölbung einen freizügigeren, Stabilitätsanforderungen besser entsprechenden Einbau des Querträgers. Es ist von besonderem Vorteil, wenn der Querträger eine zur Fahrzeuglängsachse außermittige, der Anschlußstelle zur Verbindung mit einer Lenksäule gegenüberliegende Anschlußstelle zur Verbindung mit einer Airbagvorrichtung aufweist. Auf diese Weise kann die Variantenzahl und der Logistikaufwand weiter verringert werden. Darüber hinaus ist es besonders günstig, wenn der Querträger im Bereich der Anschlußstelle zur Verbindung mit einer Airbagvorrichtung eine Auswölbung in Richtung der Fahrzeugunterseite aufweist. Eine eingebaute Airbagvorrichtung bildet dann kein vorstehendes Bauteil der Baugruppe, wodurch die erfindungsgemäße Baugruppe kompakter wird und eine größere gestalterische Freiheit bezüglich ihrer Abdeckung mit z. B. einer Instrumententafel bietet.

Der Querträger einer erfindungsgemäßen Baugruppe ist besonders vielseitig verwendbar, wenn er weitere Anschlußstellen zur Verbindung mit Anbauteilen aufweist. Es bietet sich z. B. an, eine Verbindungsstelle für einen Träger für eine Mittelkonsole vorzusehen. Der einer Verstärkung der Mittelkonsole dienende Träger wird abhängig von Fahrzeugtyp und -ausstattung mit dem Querträger verbunden oder weggelassen. Zum Beispiel ist ein Träger notwendig, wenn in der Mittelkonsole zahlreiche Einbaugeräte wie z. B. eine Klimaanlage oder eine Audio-Video-Vorrichtung aufgenommen werden sollen. Hingegen erübrigt sich ein solcher Träger, wenn lediglich - z. B. in Baustellenfahrzeugen oder einfach ausgestatteten Personenkraftwagen - ein Radiogerät einzubauen ist, das die Stabilität der Mittelkonsole nicht wesentlich beeinträchtigt. Für diese verschiedenen Einsatzfälle kann erfindungsgemäß der gleiche Querträger verwendet werden. Weitere Anschlußstellen, die vorzugsweise an dem Querträger vorgesehen sein können, betreffen eine Verbindung mit einer Fahrzeugzentralelektronik und/oder einer Klimaeinrichtung und/oder Instrumententafel und/oder Pedaleinheit und/oder einer Spritzwand. Dabei ist es um so günstiger, je mehr diese fallweise benötigten Anschlußstellen an dem Querträger vorhanden sind, da sich auf diese Weise der Fertigungs- und Lageraufwand erheblich vermindern läßt. Die eine erfindungsgemäße Baugruppe in Richtung der Fahrzeugvorderseite bzw. eines Motorraums abschließende Spritzwand kann stabilitätserhöhend zusätzlich mit Bauteilen, die am Querträger anbringbar sind, wie z. B. der Pedaleinheit, verbunden sein.

Im Interesse einer Minimierung des Fahrzeuggewichts ist es von Vorteil, wenn der Querträger aus Aluminium oder einer Aluminiumlegierung besteht. Noch günstiger ist es jedoch, wenn der Querträger aus Magnesium oder einer Magnesiumlegierung besteht, da Magnesium gegenüber Aluminium bei vergleichbarem spezifischen Gewicht eine erheblich höhere Festigkeit besitzt. Eine deutliche Gewichtsreduzierung des Querträgers ist auch zu erreichen, wenn der Träger nicht als Vollbauteil ausgeführt ist, sondern vorzugsweise ein Fachwerk ist. Mit einem geeignet ausgelegten Fachwerk ist eine hohe Stabilität bei gleichzeitiger Gewichtsreduzierung zu erreichen. Einfach im Aufbau, jedoch ebenso gewichtsminimierend ist es, wenn der Querträger vorteilhaft ein Flächentragwerk ist. Hinsichtlich der auftretenden Belastungen sowie des erwünschten Anbaus weiterer Bauteile an den Querträger sind die Platten und/oder Schalen des Flächentragwerks dann vorzugsweise in etwa in Richtung der Fahrzeughochachse ausgerichtet, wobei geringe Abweichungen von der senkrechten Lage je nach Belastungsfall stabilitätserhöhend sein können.

Je nach vorhandenen Fertigungsmöglichkeiten ist es von Vorteil, wenn der Querträger ein Schweißbauteil oder - die Anzahl der Fertigungsschritte erheblich reduzierend - ein Gußbauteil ist.

Insbesondere wenn Anschlußstellen des Querträgers zur Verbindung mit weiteren Bauteilen aufwendig zu gestalten sind, kann es von Vorteil sein, wenn der Querträger und zumindest einige der Anschlußstellen lösbar miteinander verbunden sind, so daß sie nur im Bedarfsfall hinzugefügt werden müssen. Vorzugsweise sind der Querträger und zumindest einige der Anschlußstellen dann miteinander verschraubt.

Im Sinne einer möglichst weitgehenden Herstellungsvereinfachung ist es hingegen besonders günstig, wenn der Querträger und zumindest einige der Anschlußstellen unlösbar miteinander verbunden sind. Der Querträger und zumindest einige der Anschlußstellen können dann vorteilhaft miteinander verschweißt oder verklebt sein. Jedoch wird die Bauteilanzahl erheblich vermindert, wenn zumindest einige der Anschlußstellen Ausnehmungen in oder Ansätze an dem Querträger sind. Zum Beispiel bietet es sich an, diese Anschlußstellen in einem Verfahrensschritt mit dem Querträger zu gießen, wenn letzterer ein Gußbauteil ist. Der Querträger selbst kann mit der Fahrzeugzelle und/oder der Lenksäule in beliebiger Weise verbunden sein, aber es ist besonders vorteilhaft, wenn der Querträger mit der Fahrzeugzelle und/oder der Lenksäule verschraubt ist, so daß die erfindungsgemäße Baugruppe mit dem Querträger und den weiteren Anbauteilen vorgefertigt werden kann, bevor sie als komplette Einheit mit der Fahrzeugzelle und der Lenksäule verbunden wird. Auf Schweißungen in unmittelbarer Nähe hochsensibler Bauteile wie z. B. einer Fahrzeugzentralelektronik oder einer Airbagvorrichtung kann dann verzichtet werden.

Die Erfindung wird im folgenden anhand von in der beigefügten Zeichnung dargestellten Ausführungsbeispielen näher erläutert. Es zeigt
- Figur 1: eine erfindungsgemäße Baugruppe für einen Cockpit-Bereich eines Fahrzeugs mit Rechtslenkung in perspektivischer Ansicht,
- Figur 2: die Baugruppe aus Figur 1 in Explosionsdarstellung,
- Figur 3: eine erfindungsgemäße Baugruppe für einen Cockpit-Bereich eines Fahrzeugs mit Linkslenkung in perspektivischer Ansicht und
- Figur 4: die Baugruppe aus Figur 3 in Explosionsdarstellung.

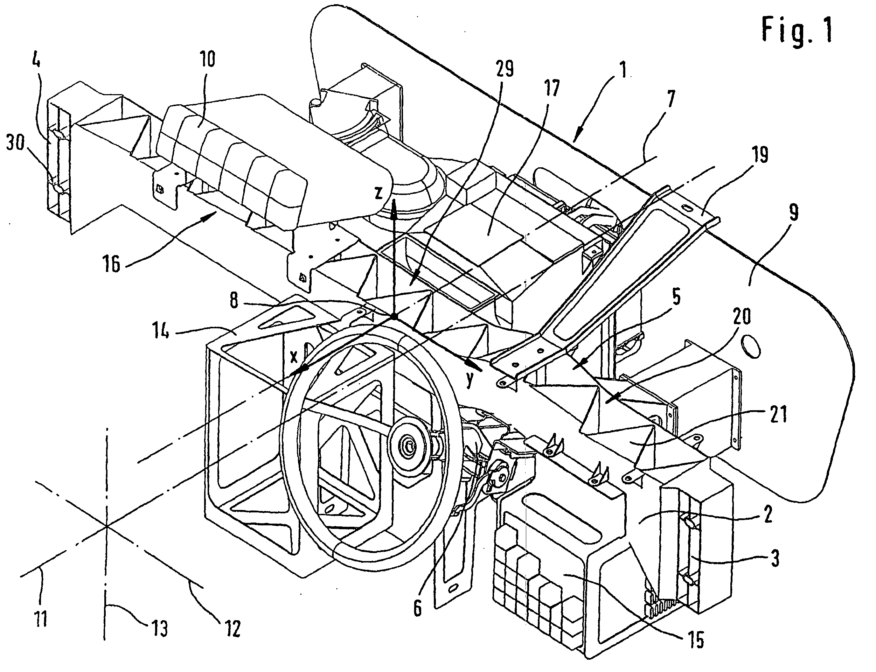

Die in Figur 1 dargestellte Baugruppe 1 für einen Cockpit-Bereich eines Rechtslenker-Kraftfahrzeugs weist einen Querträger 2 und eine mittels einer Strebe 19 mit diesem verbundene Spritzwand 9 mit weiteren Anbauteilen auf.

Zur Verdeutlichung der Einbaulagen der verschiedenen Bauteile ist eine Fahrzeuglängsachse 11, eine Fahrzeugquerachse 12 und eine Fahrzeughochachse 13 des der Baugruppe 1 zugehörigen, hier nicht dargestellten Kraftfahrzeugs in Figur 1 ebenso mit eingezeichnet wie der geometrische Mittelpunkt 8 des Querträgers 2. Im geometrischen Mittelpunkt 8, der senkrecht über der Fahrzeuglängsachse 11 liegt und von einer Parallelen 7 zur Fahrzeuglängsachse 11 geschnitten wird, liegt der Ursprung des Querträger-Koordinatensystems 29.

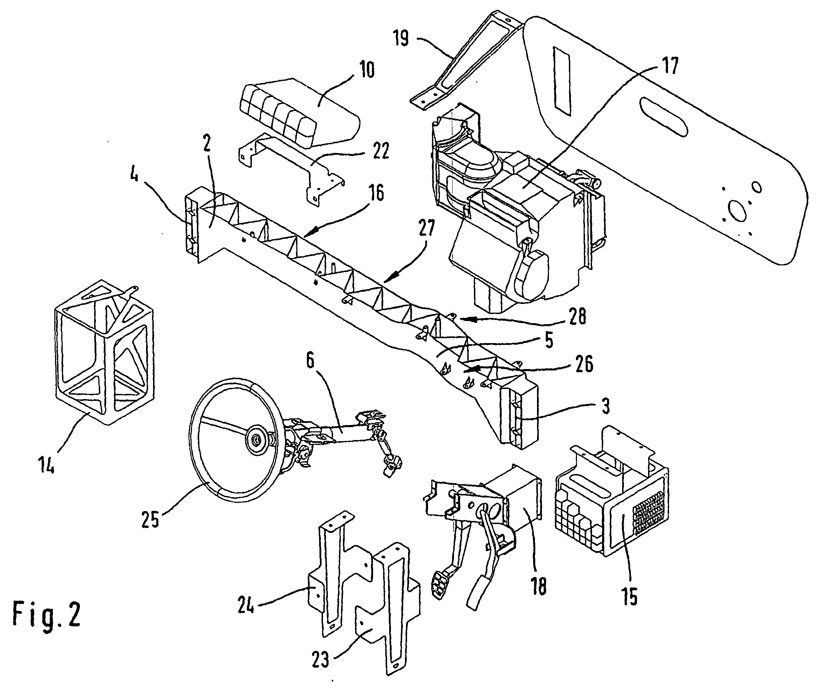

Anschlußstellen 3 und 4 des Querträgers 2 dienen einer rechts- bzw. linksseitigen Verbindung des Trägers 2 mit einer hier nicht dargestellten Fahrzeugzelle, an einer Anschlußstelle 5 ist eine Lenksäule 6 mit einem Lenkrad 25 (Figur 2) angeschlossen. Der Querträger 2, die Anschlußstellen 3, 4 zur Verbindung mit der Fahrzeugzelle und die Anschlußstelle 5 zur Verbindung mit der Lenksäule 6 sind symmetrisch zu der Längsmittelebene des Querträgers, d. h. der yz-Ebene des Koordinatensystems 29.

An dem Querträger 2 ist linksseitig in einer Anschlußstelle 16 eine Beifahrer-Airbagvorrichtung 10 mittels eines Halters 22 (Figur 2) befestigt und rechtsseitig eine Zentralelektronik 15 eingebaut. Mittig, im Bereich der Fahrzeuglängsachse 11, befindet sich ein Träger 14 für eine - ebenso wie eine, die Baugruppe 1 zu einem Fahrgastraum hin abdeckende Instrumententafel - nicht dargestellte Mittelkonsole sowie eine Heizungs- und Klimaeinrichtung 17.

Der Querträger 2 ist als Flächentragwerk 20 aufgebaut, das aus im wesentlichen in etwa vertikal ausgerichteten Platten 21 besteht ist. Im Bereich der Anschlußstellen 3, 4 zur Verbindung mit einer Fahrzeugzelle sind aus Steifigkeitsgründen (Festlegung von Anschlußpunkten) einige in etwa horizontal ausgerichtete Platten 30 vorgesehen. Besonders günstig ist es, wenn der Querträger 2 aus Magnesium-Druckguß besteht, da er so eine hohe Festigkeit bei dennoch geringem Eigengewicht besitzt.

Figur 2 zeigt die Baugruppe 1 aus Figur 1 in einer Explosionsdarstellung. Hier, wie auch im folgenden sind gleiche Teile mit gleichen Bezugszeichen versehen. Tunnelstreben 23, 24 zur Verbindung mit einem Fahrzeugmitteltunnel werden mit dem Querträger 2 in dessen mittleren Bereich an einer hier nicht sichtbaren Anschlußstelle an der Trägerunterseite verbunden. Ermöglicht die Anschlußstelle durch verschiedene Anschlußpunkte unterschiedliche Positionsvorgaben für die Tunnelstreben 23, 24, so kann auf einfache Weise eine Anpassung auf verschiedene gewünschte Mitteltunnelweiten erfolgen.

Eine Pedaleinheit 18 wird sowohl an dem Träger 2 als auch - die Stabilität der Baugruppe 1 erhöhend - an der Spritzwand 9 befestigt. Anschlußstellen 26 zur Verbindung mit der Zentralelektronik 15, 27 zur Verbindung mit dem Träger 14 für die Mittelkonsole und 28 zur Verbindung mit der Spritzwand 9 mittels der Strebe 19 weisen, wie in Figur 2 deutlich zu erkennen, ebenso wie die weiteren, oben genannten Anschlußstellen die gleiche Symmetrie wie der Querträger 2 auf. Aufgrund dieser Symmetrie kann der Querträger 2 um 180° um seine Hochachse, d. h. die z-Achse des Koordinatensystems 29, gedreht für ein Linkslenker-Kraftfahrzeug verwendet werden.

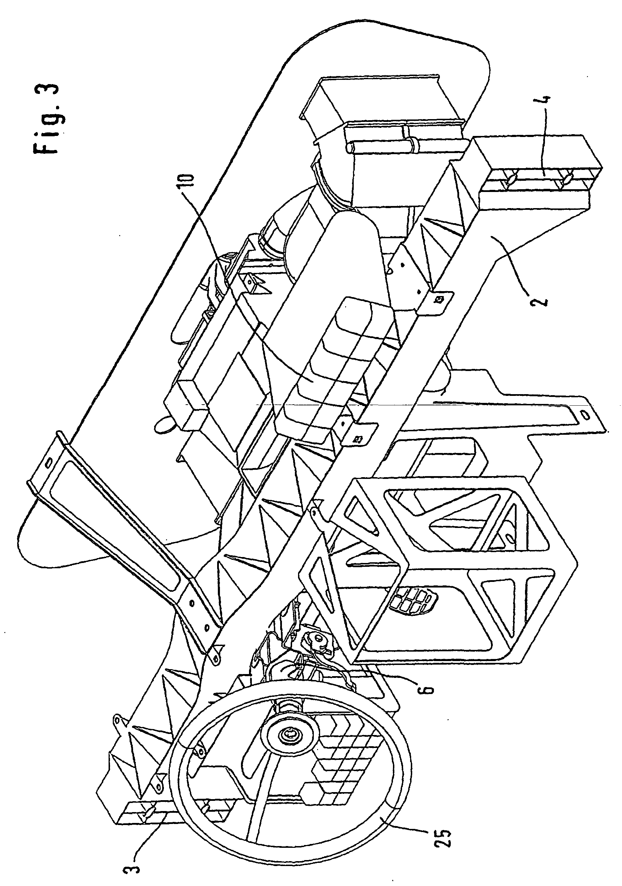

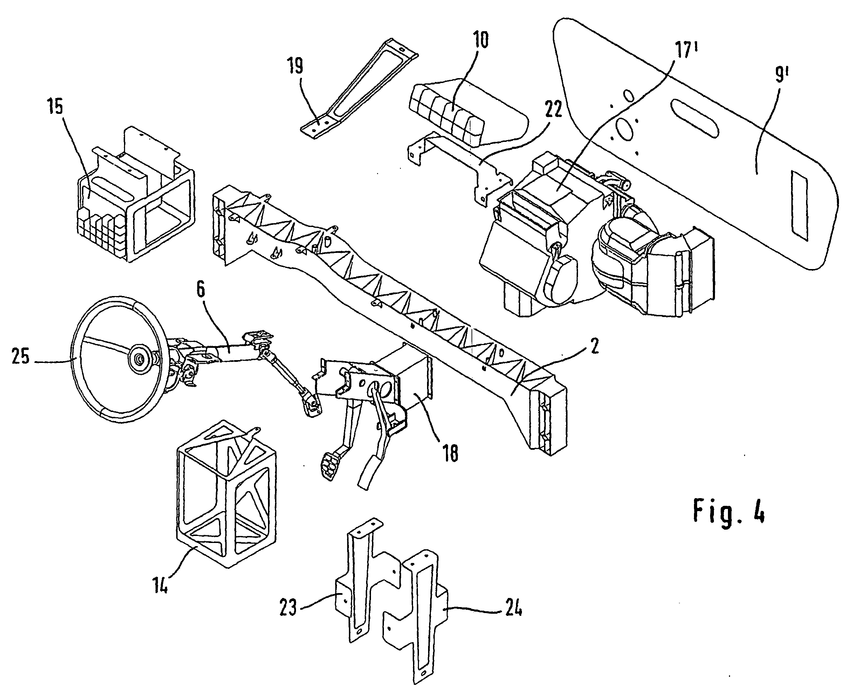

Eine entsprechende Darstellung einer Baugruppe für den Cockpit-Bereich eines Linkslenker-Kraftfahrzeugs ist in Figur 3 und 4 gezeigt. Es ist zu erkennen, daß nicht nur der Querträger 2, sondern auch zahlreiche Bauteile wie z. B. Airbagvorrichtung 10, Zentralelektronik 15 oder Mittelkonsolenträger 14 für beide Lenkungsvarianten verwendbar sind. Andere Bauteile bedürfen hingegen einiger Modifikationen, um im Linkslenker-Fahrzeug verwendet werden zu können. Dazu gehören eine Heizungs- und Klimaeinrichtung 17' und eine Spritzwand 9'. Die wesentlichen Aggregate im Motorraum eines Kraftfahrzeugs sind bei Rechts- und Linkslenker-Fahrzeugen an gleicher Position angeordnet. Da die Spritzwand Ausnehmungen für Verbindungen mit Aggregaten im Motorraum des Fahrzeugs sowie Anschlußstellen für im Motorraum angeordnete Bauteile aufweist, ist bei der Spritzwand eine Symmetrie nur mit Einschränkungen zu verwirklichen. Vorteilhaft ist es jedoch, wenn die Aggregate so angeordnet sind, daß die Spritzwand symmetrisch ausgebildet und sowohl für Rechts- als auch für Linkslenker-Fahrzeuge verwendet werden kann.

## Patentansprüche

1. Baugruppe (1) für einen Cockpit-Bereich eines Fahrzeugs, insbesondere eines Kraftfahrzeugs, mit einem sich in etwa über die Breite eines Fahrzeuginnenraums erstreckenden Querträger (2), wobei der Querträger (2) an seinen Endbereichen Anschlußstellen (3, 4) zur Verbindung mit einer Fahrzeugzelle und eine zur Fahrzeuglängsachse (11) außermittige Anschlußstelle (5) zur Verbindung mit einer Lenksäule (6) aufweist, **dadurch gekennzeichnet, daß** der Querträger (2) und die Anschlußstellen (3, 4, 5) eine Baueinheit bilden und daß die äußere Form des Querträgers (2) und die Anschlußstellen (3, 4, 5) zur Verbindung mit der Fahrzeugzelle und zur Verbindung mit der Lenksäule (6) symmetrisch zu der Längsmittelebene des Querträgers sind, wobei die Längsmittelebene des Querträgers (2) die sich vertikal und in Richtung der Fahrzeugquerachse erstreckende Ebene ist, die den auf einer Parallelen (7) zur Fahrzeuglängsachse und senkrecht über dieser liegenden geometrischen Mittelpunkt (8) des Querträgers (2) schneidet.

2. Baugruppe nach dem Oberbegriff des Anspruchs 1, **dadurch gekennzeichnet, daß** der Querträger (2) und die Anschlußstellen (3, 4, 5) eine Baueinheit bilden und daß die äußere Form des Querträgers (2) und die Anschlußstellen (3, 4, 5) zur Verbindung mit der Fahrzeugzelle und zur Verbindung mit der Lenksäule (6) symmetrisch zu dem auf einer Parallelen (7) zur Fahrzeuglängsachse und senkrecht über letzterer liegenden geometrischen Mittelpunkt (8) des Querträgers (2) sind.

3. Baugruppe nach Anspruch 1 oder 2, **dadurch gekennzeichnet, daß** der Querträger (2) im Bereich der Anschlußstelle (5) zur Verbindung mit einer Lenksäule (6) eine Auswölbung in Richtung der Fahrzeugoberseite aufweist.

4. Baugruppe nach einem der vorhergehenden Ansprüche, **dadurch gekennzeichnet, daß** der Querträger (2) eine zur Fahrzeuglängsachse (11) außermittige, der Anschlußstelle (5) zur Verbindung mit einer Lenksäule (6) gegenüberliegende Anschlußstelle (16) zur Verbindung mit einer Airbagvorrichtung (10) aufweist.

5. Baugruppe nach Anspruch 4, **dadurch gekennzeichnet, daß** der Querträger (2) im Bereich der Anschlußstelle (16) zur Verbindung mit einer Airbagvorrichtung (10) eine Auswölbung in Richtung der Fahrzeugunterseite aufweist.

6. Baugruppe nach einem der vorhergehenden Ansprüche, **dadurch gekennzeichnet, daß** der Querträger (2) Anschlußstellen zur Verbindung mit einem Träger (14) für eine Mittelkonsole und/oder einer Fahrzeugelektronik (15) und/oder einer Klimaeinrichtung (17) und/oder einer Instrumententafel und/oder einer Pedaleinheit (18) und/oder einer Spritzwand (9) aufweist.

7. Baugruppe nach einem der vorhergehenden Ansprüche, **dadurch gekennzeichnet, daß** der Querträger (2) aus Aluminium oder einer Aluminiumlegierung besteht.

8. Baugruppe nach einem der Ansprüche 1 bis 6, **dadurch gekennzeichnet, daß** der Querträger (2) aus Magnesium oder einer Magnesiumlegierung besteht.

9. Baugruppe nach einem der vorhergehenden Ansprüche, **dadurch gekennzeichnet, daß** der Querträger (2) ein Fachwerk ist.

10. Baugruppe nach einem der Ansprüche 1 bis 8, **dadurch gekennzeichnet, daß** der Querträger (2) ein Flächentragwerk (20) ist.

11. Baugruppe nach Anspruch 10, **dadurch gekennzeichnet, daß** die Platten (21) und/oder Schalen des Flächentragwerks (20) in etwa in Richtung der Fahrzeughochachse (13) ausgerichtet sind.

12. Baugruppe nach einem der vorhergehenden Ansprüche, **dadurch gekennzeichnet, daß** der Querträger (2) ein Schweißbauteil ist.

13. Baugruppe nach einem der Ansprüche 1 bis 11, **dadurch gekennzeichnet, daß** der Querträger (2) ein Gußbauteil ist.

14. Baugruppe nach einem der vorhergehenden Ansprüche, **dadurch gekennzeichnet, daß** der Querträger (2) und zumindest einige der Anschlußstellen lösbar miteinander verbunden sind.

15. Baugruppe nach Anspruch 14, **dadurch gekennzeichnet, daß** der Querträger (2) und zummdest einige der Anschlüßstellen uniteinander verschraubt sind.

16. Baugruppe nach einem der vorhergehenden Ansprüche, **dadurch gekennzeichnet, daß** der Querträger (2) und zumindest einige der Anschlußstellen unlösbar miteinander verbunden sind.

17. Baugruppe nach Anspruch 16, **dadurch gekennzeichnet, daß** der Querträger (2) und zumindest einige der Anschlußstellen miteinander verschweißt oder verklebt sind.

18. Baugruppe nach Anspruch 16 oder 17, **dadurch gekennzeichnet, daß** zumindest einige der Anschlußstellen Ausnehmungen in oder Ansätze an dem Querträger (2) sind.

19. Baugruppe nach einem der vorhergehenden Ansprüche, **dadurch gekennzeichnet, daß** der Querträger (2) mit der Fahrzeugzelle und/oder der Lenksäule (6) verschraubt ist.

## Claims

1. Assembly (1) for a cockpit area of a vehicle, in particular of a motor vehicle, having a cross member (2) extending approximately over the width of a vehicle interior, the cross member (2) having attachment points (3, 4) at its end regions for the connection to a vehicle cell and an attachment point (5) which is eccentric to the vehicle longitudinal axis (11), for the connection to a steering column (6), **characterized in that** the cross member (2) and the attachment points (3, 4, 5) form a constructional unit, and **in that** the external shape of the cross member (2) and the attachment points (3, 4, 5) for the connection to the vehicle cell and for the connection to the steering column (6) are symmetrical to the longitudinal central plane of the cross member, the longitudinal central plane of the cross member (2) being that plane which extends vertically and in the direction of the vehicle transverse axis and which intersects the geometrical central point (8) of the cross member (2), which central point is situated on a parallel line (7) to the vehicle longitudinal axis and perpendicularly above said longitudinal axis.

2. Assembly according to the precharacterizing clause of Claim 1, **characterized in that** the cross member (2) and the attachment points (3, 4, 5) form a constructional unit, and **in that** the external shape of the cross member (2) and the attachment points (3, 4, 5) for the connection to the vehicle cell and for the connection to the steering column (6) are symmetrical to the geometrical central point (8) of the cross member (2), which central point is situated on a parallel line (7) to the vehicle longitudinal axis and perpendicularly above said longitudinal axis.

3. Assembly according to Claim 1 or 2, **characterized in that**, in the region of the attachment point (5) for the connection to a steering column (6), the cross member (2) has a bulge in the direction of the vehicle upper side.

4. Assembly according to one of the preceding claims, **characterized in that** the cross member (2) has an attachment point (16) which is eccentric to the vehicle longitudinal axis (11), lies opposite the attachment point (5) for the connection to a steering column (6) and is intended for the connection to an airbag device (10).

5. Assembly according to Claim 4, **characterized in that**, in the region of the attachment point (16) for the connection to an airbag device (10), the cross member (2) has a bulge in the direction of the vehicle lower side.

6. Assembly according to one of the preceding claims, **characterized in that** the cross member (2) has attachment points for the connection to a support (14) for a centre console, and/or to a vehicle electronic unit (15) and/or to an air-conditioning device (17) and/or to a dashboard and/or to a pedal unit (18) and/or to a splashboard (9).

7. Assembly according to one of the preceding claims, **characterized in that** the cross member (2) consists of aluminium or an aluminium alloy.

8. Assembly according to one of Claims 1 to 6, **characterized in that** the cross member (2) consists of magnesium or a magnesium alloy.

9. Assembly according to one of the preceding claims, **characterized in that** the cross member (2) is a framework.

10. Assembly according to one of Claims 1 to 8, **characterized in that** the cross member (2) is a plane load-bearing structure (20).

11. Assembly according to Claim 10, **characterized in that** the panels (21) and/or shells of the plane load-bearing structure (20) are aligned approximately in the direction of the vehicle vertical axis (13).

12. Assembly according to one of the preceding claims, **characterized in that** the cross member (2) is a welded component.

13. Assembly according to one of Claims 1 to 11, **characterized in that** the cross member (2) is a cast component.

14. Assembly according to one of the preceding claims, **characterized in that** the cross member (2) and at least some of the attachment points are connected detachably to one another.

15. Assembly according to Claim 14, **characterized in that** the cross member (2) and at least some of the attachment points are screwed to one another.

16. Assembly according to one of the preceding claims, **characterized in that** the cross member (2) and at least some of the attachment points are connected nondetachably to one another.

17. Assembly according to Claim 16, **characterized in that** the cross member (2) and at least some of the attachment points are welded or bonded to one another.

18. Assembly according to Claim 16 or 17, **characterized in that** at least some of the attachment points are recesses in or projections on the cross member (2).

19. Assembly according to one of the preceding claims, **characterized in that** the cross member (2) is screwed to the vehicle cell and/or to the steering column (6)

## Revendications

1. Ensemble (1) pour la zone du tableau de bord d'un véhicule, en particulier un véhicule automobile, qui comporte un support transversal (2) qui s'étend sensiblement sur toute la largeur de l'espace intérieur du véhicule, le support transversal (2) présentant sur ses zones d'extrémité des emplacements de raccordement (3, 4) destinés à assurer la liaison avec la cellule du véhicule et un emplacement de raccordement (5) situé hors de l'axe longitudinal central (11) du véhicule pour assurer la liaison avec la colonne de direction (6), **caractérisé en ce que** le support transversal (2) et les emplacements de raccordement (3, 4, 5) forment une entité et **en ce que** la forme extérieure du support transversal (2) et les emplacements de raccordements (3, 4, 5) qui assurent la liaison avec la cellule du véhicule et la liaison avec la colonne de direction (6) sont disposés symétriquement par rapport au plan longitudinal central du support transversal, le plan longitudinal central du support transversal (2) étant le plan qui s'étend à la verticale et dans la direction de l'axe transversal du véhicule qui coupe le centre géométrique (8) du support transversal (2) situé sur une parallèle (7) à l'axe longitudinal du véhicule et à la verticale au-dessus de ce dernier.

2. Ensemble selon le préambule de la revendication 1, **caractérisé en ce que** le support transversal (2) et les emplacements de raccordement (3, 4, 5) forment une entité et **en ce que** la forme extérieure du support transversal (2) et les emplacements de raccordement (3, 4, 5) qui assurent la liaison avec la cellule du véhicule et la liaison avec la colonne de direction (6) sont disposés symétriquement par rapport au centre géométrique (8) du support transversal (2) qui est situé sur une parallèle (7) à l'axe longitudinal du véhicule et à la verticale au-dessus de ce dernier.

3. Ensemble selon la revendication 1 ou 2, **caractérisé en ce que** le support transversal (2) présente dans la zone de l'emplacement de raccordement 5 destiné à assurer la liaison avec la colonne de direction (6) un cintrage en direction du côté supérieur du véhicule.

4. Ensemble selon l'une des revendications précédentes, **caractérisé en ce que** le support transversal (2) présente un emplacement de raccordement (16) destiné à assurer la liaison avec un dispositif (10) de coussin gonflable de sécurité excentrique par rapport à l'axe longitudinal (11) du véhicule et face à l'emplacement de raccordement (5) destiné à assurer la liaison avec la colonne de direction (6).

5. Ensemble selon la revendication 4, **caractérisé en ce que** dans la zone de l'emplacement de raccordement (16) destiné à assurer la liaison avec le dispositif (10) de coussin gonflable de sécurité, le support transversal (2) présente un cintrage en direction du côté inférieur du véhicule.

6. Ensemble selon l'une des revendications précédentes, **caractérisé en ce que** le support transversal (2) présente des emplacements de raccordement destinés à assurer la liaison avec un support (14) d'une console centrale et/ou d'une électronique (15) du véhicule et/ou d'une installation de climatisation (17) et/ou d'un tableau de bord et/ou d'une unité de pédales (18) et/ou d'un tablier d'auvent (9).

7. Ensemble selon l'une des revendications précédentes, **caractérisé en ce que** le support transversal (2) est réalisé en aluminium ou un alliage d'aluminium.

8. Ensemble selon l'une des revendications 1 à 6, **caractérisé en ce que** le support transversal (2) est réalisé en magnésium ou en un alliage d'aluminium.

9. Ensemble selon l'une des revendications précédentes, **caractérisé en ce que** le support transversal (2) est un treillis.

10. Ensemble selon l'une des revendications 1 à 8, **caractérisé en ce que** le support transversal (2) est un treillis porteur plat (20).

11. Ensemble selon la revendication 10, **caractérisé en ce que** les plaques (21) et/ou les coquilles du treillis porteur plat (20) sont orientées sensiblement en direction de l'axe supérieur (13) du véhicule.

12. Ensemble selon l'une des revendications précédentes, **caractérisés en ce que** le support transversal (2) est un composant soudé.

13. Ensemble selon l'une des revendications 1 à 11, **caractérisé en ce que** le support transversal (2) est un composé coulé.

14. Ensemble selon l'une des revendications précédentes, **caractérisé en ce que** le support transversal (2) et au moins certains des emplacements de raccordement sont reliés les uns aux autres de manière libérable.

15. Ensemble selon la revendication 14, **caractérisé en ce que** le support transversal (2) et au moins certains des emplacements de raccordement sont vissés les uns sur les autres.

16. Ensemble selon l'une des revendications précédentes, **caractérisé en ce que** le support transversal (2) et au moins certains des emplacements de raccordement sont reliés aux autres de manière non libérable.

17. Ensemble selon la revendication 16, **caractérisé en ce que** le support transversal (2) et au moins certains des emplacements de raccordement sont soudés ou collés les uns aux autres.

18. Ensemble selon les revendications 16 ou 17, **caractérisé en ce qu'**au moins certains des emplacements de raccordement sont des découpes ou des appendices ménagés sur le support transversal (2).

19. Ensemble selon l'une des revendications précédentes, **caractérisé en ce que** le support transversal (2) est vissé à la cellule du véhicule et/ou à la colonne de direction (6).
